# EUROPEAN PATENT APPLICATION

(11) **EP 4 641 331 A2**
(43) Date of publication of application: **29.10.2025**
(21) Application number: 25193535.9
(22) Date of filing: 10.09.2020
(51) Int. Cl.: G05B 19/418

(54) **A PROCEDURE TO SOLVE AN UNKNOWN FAULT OF AT LEAST PART OF AN AUTOMATIC MACHINE FOR MANUFACTURING OR PACKING CONSUMER PRODUCTS**

(30) Priority: 10.09.2019 IT 201900015953
(62) Divisional of application: 20786592.4
(71) Applicant: G.D SOCIETA' PER AZIONI, 40133 Bologna (IT)
(72) Inventor: DEGLI ESPOSTI, Matteo, 40133 Bologna (IT); FABBRI, Gabriele, 40133 Bologna (IT); ZANOTTI, Maurizio, 40133 Bologna (IT)
(74) Representative: Studio Torta S.p.A.

(57) **Abstract**

A procedure to solve an unknown fault of at least part (3) of an automatic machine (1) for manufacturing or packing consumer products and comprising a step of implementing only once a digital simulator (9) of the part (3) of the automatic machine (1) to be analysed; a step of determining a list of all the operating variables (7) characterizing the operation at least of the part (3) of the automatic machine (1); a step of recording, for a finite time interval (I), a trace (6) of at least some of the operating variables (7) while the part (3) of the machine (1) is in an operating state, so as to obtain a real sample (10); and a step of simulating the operation of the part (3) of the automatic machine (1) entering the real sample (10) as an input into the digital simulator (9), so as to obtain simulation results (11).

## Description

### CROSS-REFERENCE TO RELATED APPLICATIONS

This patent application claims priority from Italian patent application no. 102019000015953 filed on 10/09/2019, the entire disclosure of which is incorporated herein by reference.

### TECHNICAL FIELD

The present invention relates to a procedure to solve an unknown fault of at least part of an automatic machine for manufacturing or packing consumer products.

The present invention finds an advantageous, but non-limiting, application in solving an unknown fault of an automatic machine for packing packages, to which the following discussion will make explicit reference without thereby losing its generality.

### PRIOR ART

An automatic packing machine usually comprises a plurality of actuators which act on consumer products (for example cigarette packs, foodstuffs, sanitary napkin items, etc.) to modify the conformation, structure or position thereof. Generally, the actuators are electric motors or pneumatic cylinders and are connected integrally to mechanical parts of different shapes and sizes designed to process consumer products.

Due to the continuous increase in production volumes, these automatic machines are subject to increasing complexity, both as regards the mechanical parts, which must take up increasingly less space and perform increasingly complex operations, and as regards the increase of active components of the automatic machine, such as motors and/or sensors. This growing complexity makes it increasingly difficult to identify and solve the various unknown faults that may arise due to dirt, wear, breakage of mechanical parts, incorrect calibration or inaccurate assembly of a component, incorrect management of the software and of the cycles inside it, etc.

This problem is worsened in the case of several machines connected in line.

The presence of manuals and catalogues relating to the solution of faults, as well as diagnostic systems that are increasingly sensorized and precise, however, fail to accurately suggest to an operator a decisive solution for such faults. Therefore, the identification and solution of an (initially) unknown faults involves considerable losses of production time.

In some cases, these unknown faults are sporadic, i.e. they occur occasionally and intermittently, and therefore do not allow an in-depth analysis of the phenomenon (either physical or otherwise, for example software) that caused them. In these cases, the identification and solution of the problem are often set aside, preferring to increase waste in order not to completely stop production. If, on the other hand, the identification and solution of the problem are addressed, due to the sporadic nature of the fault, there is a risk of wasting time and resources without the same fault occurring enough times to allow it to be understood and solved.

In most cases, however, to solve an unknown, either sporadic or not, fault, it is necessary to stop the automatic machine to be able to assess the causes of the fault on field. Furthermore, it often happens that a simple machine operator needs the support of a competent designer or technician to solve complex problems. This results in additional expenses for the manufacturer of automatic machines, who must send designers to the production sites.

### DESCRIPTION OF THE INVENTION

The object of the present invention is to provide a procedure for solving an unknown fault of at least part of an automatic machine for manufacturing or packing consumer products which is at least partially free from the drawbacks described above and, at the same time, is simple and cost-effective to make. According to the present invention, a procedure is provided to solve an unknown fault of at least part of an automatic machine for manufacturing or packing consumer products, according to what claimed in the appended claims. An automatic machine is also provided for manufacturing or packing consumer products configured to carry out the above process.

The claims describe preferred embodiments of the present invention forming an integral part of the present description.

### BRIEF DESCRIPTION OF THE DRAWINGS

A number of non-limiting embodiments of the present invention will be described by way of example with reference to the accompanying drawings, in which:
- Figure 1 is a perspective and schematic view of an automatic packing machine for the production of packages;
- Figure 2 schematically illustrates the structure and the connection between the automatic machine and a simulation system;
- Figure 3 illustrates a possible flow diagram relating to the general steps of the procedure and how they can be connected to each other;
- Figure 4 schematically illustrates the graphs obtained during a simulation step.

### PREFERRED EMBODIMENTS OF THE INVENTION

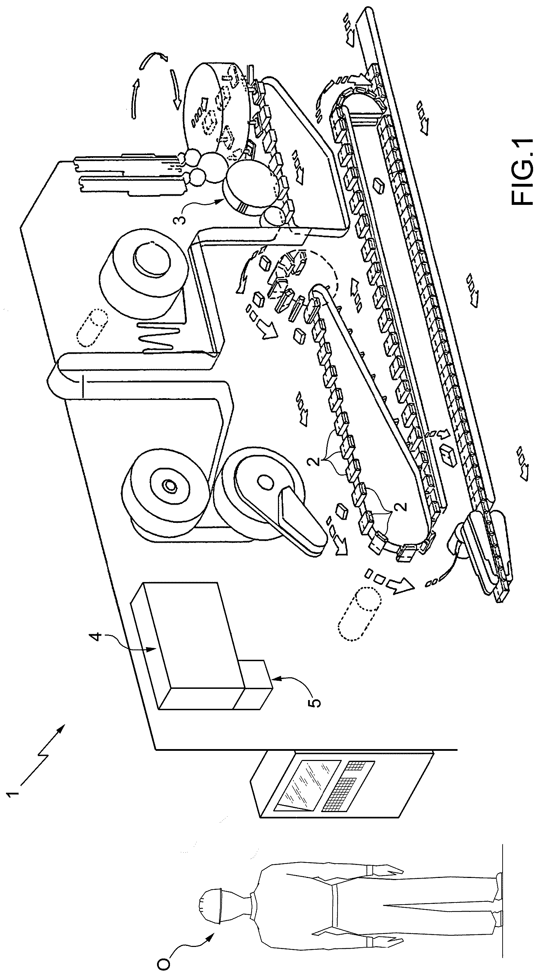

Figure 1 illustrates an automatic machine 1 for manufacturing consumer products, in particular an automatic packing machine 1 for applying a transparent overwrap to cigarette packs. According to a first aspect of the present invention, a procedure is provided for solving an (initially) unknown fault of at least part of the automatic machine 1.

The automatic machine 1 comprises a plurality of movable operating members designed to carry out processing on consumer products (packs 2 of cigarettes in the embodiment illustrated in Figure 1). In particular, the automatic machine 1 comprises a part 3 (i.e. a wrapping unit) provided with a set of actuators. According to some preferred but non-limiting embodiments such as those illustrated in the accompanying figures, the actuators comprise electric motors (in particular of the brushless type). According to other non-limiting embodiments, the actuators also comprise types of drives other than electric motors (for example pneumatic or hydraulic cylinders, electrically actuated cylinders, etc.).

The automatic machine 1 also comprises: a control unit 4 designed to control the state, position and dynamics of the movable operating members (and therefore also of the actuators) of the automatic machine 1, and a recording system 5, in particular a real time recording system 5, configured to record a trace 6 (i.e. record a set of at least part of operating variables 7 characterizing the operation of the automatic machine 1). For example, the recording system 5 may be a computer, a processor, an electronic card, etc.

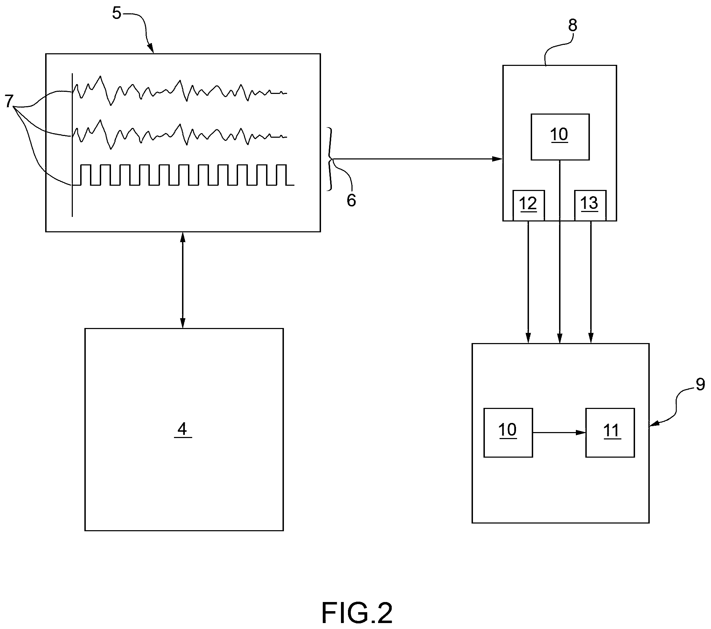

Advantageously but not necessarily, and as illustrated in the non-limiting embodiment of Figure 2, the automatic machine 1 comprises a writable memory 8 (in particular non-volatile), which is connected to the recording system 5 so that the recording system 5 may write on it the values of the operating variables 7 to be recorded (i.e. trace 6).

According to some non-limiting and non-illustrated embodiments, the control unit 4 comprises the recording system 5 and the writable memory 8.

The automatic machine 1 (in particular part 3) has various components which can cause a plurality of unknown faults. For example: a motor could cause a fault due to an occasional excessive current request due to dirt or interference; a component could break or disassemble (e.g. due to vibrations) and cause a sudden drop in the current required by a motor; a photocell could get dirty or generate errors due to incorrect calibration; a mechanical component could be mounted incorrectly or inaccurately and therefore have different inertial values than expected or cause a certain number of consecutive rejects, etc.

All these faults could occur in situations that do not completely hinder the production of the automatic machine and therefore may be difficult to detect and therefore to solve.

The procedure according to the present invention comprises a step of implementing only once a digital simulator 9 of the part 3 of the automatic machine 1 to be analysed (Figure 2).

The method further comprises a step of determining, in particular only once, a list of all the operating variables 7 characterizing the operation of the part 3 of the automatic machine 1. In particular, the wording "operating variables" means all those values that indicate a condition of a part or component of the automatic machine 1.

The term only once means "once". In particular, it is meant "whenever the number of operating variables 7 is changed" (for example the addition or removal of an actuator or sensor). In other words, whenever an operating variable 7 is added or removed.

By way of a non-limiting example, 7 operating variables are to be considered: the feedback of any sensor; the humidity of the environment in which the automatic machine 1 is located; the value of an encoder; the state, position, speed or acceleration of a motor; a machine state (alarm, warning, production, emptying, format change, end of shift, ...); a calibration parameter; an inertial parameter; a current; the values of a relay; the values of a pneumatic system; production counters (number of packets 2 manufactured, number of packets 2 rejected, material consumption, ...); analogue control variables (for example the level or temperature of the glue of a gumming machine, the filling degree of a lung, the level and temperature of the lubricating oil); logic control variables (for example the presence of a new reel in an unwinding spindle); etc.

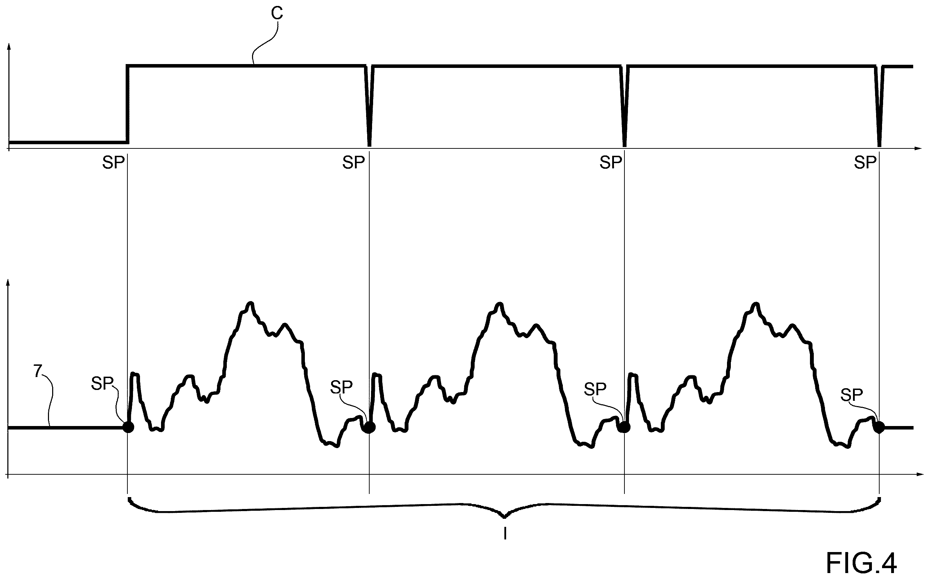

In addition, the procedure comprises a step of recording, for a finite time interval I (Figure 4), a trace 6 of at least some of the operating variables 7 while the part 3 of the machine 1 is in an operating state, so as to obtain a real sample 10.

The wording "operating state" means an operating condition of the automatic machine 1, that is, a condition in which the automatic machine 1 is switched on and free of errors that completely block its production.

Advantageously, the procedure comprises the step of simulating the operation of the part 3 of the automatic machine 1 entering the real sample 10, as an input, into the digital simulator 9, so as to obtain simulation results 11. According to some non-limiting embodiments, this step is carried out remotely, in particular by a designer on a computer, on which the digital simulator 9 is present. According to other non-limiting embodiments, this step is carried out on site, through a direct connection between the digital simulator 9 and the recorder 5.

According to some non-limiting embodiments such as that illustrated in Figure 2, the writable memory 8, containing the real sample 10 recorded by the recording device 5, is connected (either directly or through remote connection systems) to the digital simulator 9, which receives the real sample 10 as an input and, on the basis of the same, processes the simulation results 11.

In some non-limiting cases, the step of simulating the operation of the part 3 of the automatic machine 1 by entering the real sample 10 as an input into the digital simulator 9 is carried out by an automatic unit.

Advantageously but not necessarily, the digital simulator 9 is a real time simulator, in particular hard real time. In this way, it is possible to simulate precisely the dynamics of the part 3 of the automatic machine 1 using real time as a reference to diagnose exactly when the (initially) unknown fault occurs and the causes (wear, software errors, etc.) that generated it. In particular, through the digital simulator 9 it is possible to analyse all the instructions of the control unit 4 (i.e. carry out a debug that analyses each line of code) in order to verify whether the (initially) unknown fault was caused by an unexpected condition at the time of software design or not (for example, in particular conditions, the part 3 of the automatic machine 1 could be temporarily blocked waiting for an output condition in a state machine and generate sporadic rejects).

Advantageously but not necessarily, the real sample 10 is recorded through the recording system 5, which, in particular, is a real time system.

Advantageously but not necessarily, the procedure comprises the further steps of diagnosing the (initially) unknown fault (which more precisely is a sporadic fault) and of elaborating a possible solution depending on the simulation results 11. In other words, in this step, following the simulation step, the simulation results 11 are analysed in order to understand which the unknown fault is (often the only easily identifiable output of a complex line is a defective product and the fault is not immediately visible), once the fault has been understood, possible solutions are elaborated that lead to its solution.

According to some non-limiting embodiments, the step of diagnosing the unknown fault is carried out by decision tree algorithms.

According to other non-limiting embodiments and as illustrated in Figure 2, the step of diagnosing the unknown fault is carried out (by means of the digital simulator 9, which is connected to dedicated known and not illustrated analysis devices) using artificial intelligence algorithms, in particular, said artificial intelligence algorithms use at least one knowledge base 12 containing a plurality of known faults and a knowledge base 13 containing a corresponding solution for each known fault of the first knowledge base.

In some non-limiting cases, such as the one illustrated in Figure 2, the knowledge bases 12 and 13 are stored in memory 8.

In other non-limiting and not illustrated cases, the knowledge bases 12 and 13 are stored on a distributed architecture (cloud) in order to share the knowledge of several automatic machines and/or several plants.

According to further non-limiting embodiments, the step of diagnosing the unknown fault is carried out by at least one designer of the automatic machine 1 or by at least one qualified expert.

Advantageously but not necessarily, the procedure comprises the further step of verifying that the possible solution is decisive (correct). For example, this step may be carried out by monitoring the automatic machine 1, detecting whether the effects of the unknown fault occur again. More precisely, this step is carried out by recording the trace 6 again for a certain time interval (long enough to be able to exclude the recurrence of the unknown fault).

In particular, this step is carried out by a machine operator O. If the response of this step is negative, the step of elaborating the possible solution is repeated, and the solution verified by the operator is discarded.

Advantageously but not necessarily, the step of simulating the operation of the part of the automatic machine and/or the step of diagnosing the unknown fault are carried out remotely. In this way, it is possible to provide adequate support to customers purchasing automatic machines 1 through a unique and global set of qualified individuals. Thanks to this step, it is possible to lighten the computational load of the digital simulator 9 by selecting only the operating variables 7 which could be useful for solving the unknown fault.

According to some non-limiting embodiments, the procedure also comprises a step of selecting the part of the operating variables 7 to be recorded (of which to obtain a trace 6). In particular, this step is carried out by at least one designer of the automatic machine or by at least one qualified expert.

According to some non-limiting embodiments, the recording step is simultaneous with the simulating step. In particular, the operating variables 7 are shared through data transmission systems that allow real-time connection operations (including remote) to be performed (for example 5G technology). In this way, it is possible to shorten the solution time of the unknown fault.

In some non-limiting cases, the operation of the automatic machine 1 is a periodic operation, that is to say that the processing of the packs 2 of cigarettes is timed by a machine cycle.

Advantageously but not necessarily, during the step of simulating the part 3 of the automatic machine 1, at least one synchronization point SP is defined as a reference for synchronizing the real sample 10 and the simulation (see Figure 4). In particular, said synchronization point is periodic depending on a cycle of the automatic machine 1 and such synchronization is therefore guaranteed at each production cycle of the automatic machine 1, so as to avoid phenomena of accumulation of delays.

The non-limiting embodiment of Figure 6 illustrates the simulation step, during which the recorded interval I is reproduced and synchronized following a specific command C.

According to some non-limiting embodiments, the trace 6 is recorded continuously during said finite time interval I; in particular, until the unknown fault occurs. The wording "continuously", in the case of a digital architecture (discrete time), means that the trace 6 is recorded for each sample detected (by a sensor or by a microprocessor) during the finite time interval I.

According to other non-limiting embodiments, the trace 6 is recorded by sample, in particular periodically, for said finite time interval, more precisely until the unknown fault occurs. In particular, the wording "by sample" means the recording of one (or more) consecutive samples followed by a plurality of consecutive unrecorded samples. More specifically, sample recording is sporadic, i.e. there are more unrecorded samples than recorded ones.

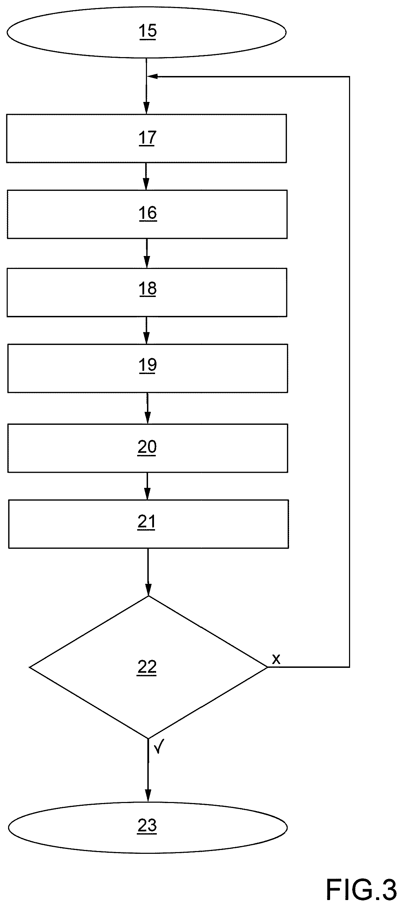

In the flow diagram of Figure 3 the convention has been used according to which the oval blocks indicate the beginning or the end of the diagram, the rectangular ones indicate a generic instruction and the rhomboid blocks, placed downstream of a branch, are choice blocks, containing a logical condition that determines which direction the flow will take. In particular, at the choice blocks, the flow of the diagram branches off in the direction marked by the affirmative symbol "✔" if the logical condition is satisfied, otherwise, if this condition is not satisfied, the flow forks in the direction marked by the negative symbol "x".

In use, as illustrated in the flow diagram of Figure 3, the process begins with the step 15 of implementing the digital simulator 9 (initial block of the diagram). In particular, the digital simulator 9 is implemented by means of a virtual system which simulates the entire structure of the part 3 to be analysed. More precisely, the digital simulator 9 allows mechanics, hardware, positions of mechanical parts, motors (in order to check for a possible following error and correct it), sensors, etc., to be simulated.

Following this step, the procedure comprises the further step 16 of selecting part of the variables 7 so as to define the trace 6. In the non-limiting case illustrated in Figure 3, since step 16 is carried out by a designer away from the machine, the procedure also comprises a step 17 during which a machine operator describes to the designer the unknown fault found and to be analysed, so that the designer prepares the trace 6 specifically for that unknown fault.

Thereafter, the procedure provides a step 18 of recording, for the finite time interval I (Figure 3), the trace 6 of at least some of the operating variables 7 while the part 3 of the machine 1 is in an operating state, so as to obtain a real sample 10. Following this step, the real sample 10, in step 19, is sent to the designer or to the analysis system (AI), which enters it (in step 20) as input to the digital simulator 9, in order to obtain the simulation results 11, on the basis of which the solution to the unknown fault is elaborated. Such solution, in step 21 is proposed to the operator to verify the correctness thereof. If this solution is not correct (following a verification step 22, in particular carried out by the operator), the procedure is returned to step 17 describing the unknown fault, while, if the proposed solution is correct, the procedure proceeds to the final block 23 during which production resumes without any faults of any type.

According to a further aspect of the present invention, an automatic machine 1 for manufacturing or packing consumer products configured to carry out the procedure described up to now is provided.

Although the invention described above makes particular reference to a very precise embodiment example, it is not to be considered limited to such embodiment example since all those variants, modifications or simplifications that would be apparent to the man skilled in the field art within its scope, such as for example: the addition of further steps, of different types of recording or simulation, the use of models or algorithms other than those mentioned, etc.

The present invention has multiple advantages.

First of all, on an automatic machine for manufacturing consumer products, it improves the efficiency of solving an unknown fault, in particular sporadic, which occurs due to incorrect use of the system, or dirt, wear, breakage of mechanical parts, incorrect calibration or inaccurate assembly of a component, errors in writing the machine software, etc. In particular, by means of the procedure described above, it is possible to record a plurality of data which allow limit situations to be identified which can be used to improve the design of the automatic machine.

In addition, such efficiency is increased without the need for a qualified operator or a designer to go to the operating site to understand what the fault was and what caused it, in fact, thanks to the digital simulator and the real sample it is possible to carry out the solution step remotely.

In addition, the present invention allows solving sporadic problems without necessarily having to interrupt production, since the recording of the operating variables takes place online, while the machine is operating.

Finally, the present invention allows strengthening the software structure and identifying unforeseen operating conditions that would otherwise be extremely complicated to detect (incorrect input or output from a software cycle could cause sporadic problems that have little impact on the productivity of the automatic machine, but which could cause heavy wear or pollute the consumer product).

## Claims

1. A procedure to solve an unknown fault of at least part (3) of an automatic machine (1) for manufacturing or packing consumer products; the procedure comprises the steps of:
implementing only once a digital simulator (9) of the part (3) of the automatic machine (1) to be analysed;
determining a list of all the operating variables (7) characterizing the operation at least of the part (3) of the automatic machine (1);
recording, for a finite time interval (I), a trace (6) of at least some of the operating variables (7) while the part (3) of the machine (1) is in an operating state, so as to obtain a real sample (10);
defining at least one synchronization point (SP) as a reference for synchronizing the real sample (10) and the simulation, wherein said synchronization point (SP) is periodic depending on a cycle of the automatic machine (1);
simulating the operation of the part (3) of the automatic machine (1) entering the real sample (10), as an input, into the digital simulator (9), so as to obtain simulation results (11);
diagnosing the unknown fault, which is, in particular, a sporadic fault, and elaborating a possible solution depending on the simulation results (11).

2. A procedure according to claim 1, wherein the digital simulator (9) is a real time simulator (9), in particular a hard real time simulator.

3. A procedure according to claim 1 or 2, wherein the real sample (10) is recorded by means of a real time recording system (5).

4. A procedure according to one of the claims from 1 to 3, wherein the step of diagnosing the unknown fault is carried out by decision tree algorithms.

5. A procedure according to one of the claims from 1 to 3, wherein the step of diagnosing the unknown fault is performed using artificial intelligence algorithms; in particular, said artificial intelligence algorithms use at least one first knowledge base (12) containing a plurality of known faults and a second knowledge base (13) containing a corresponding solution for each known fault of the first knowledge base (12).

6. A procedure according to claim 3, wherein the step of diagnosing the unknown fault is carried out by at least one designer of the automatic machine (1) or by at least one qualified expert.

7. A procedure according to one of the claims from 3 to 6 and comprising the further step of checking whether the possible solution is correct; in particular, this step is carried out by an operator of the machine (1).

8. A procedure according to one of the claims from 1 to 7, wherein the step of simulating the operation of the part (3) of the automatic machine (1) and/or the step of diagnosing the unknown fault are remotely performed.

9. A procedure according to one of the claims from 1 to 8 and comprising a step of selecting the part of the operating variables (7) to be recorded; in particular, this step is carried out by at least one designer of the automatic machine (1) or by at least one qualified expert.

10. A procedure according to one of the claims from 1 to 9, wherein the operation of the part (3) of the automatic machine (1) is a periodic operation.

11. A procedure according to one of the claims from 1 to 10, wherein the trace (6) is recorded continuously during said finite time interval (I); in particular, until the unknown fault occurs.

12. A procedure according to one of the claims from 1 to 10, wherein the trace (6) is recorded by sampling, in particular periodically, during said finite time interval (I); in particular, until the unknown fault occurs.

13. An automatic machine (1) for manufacturing or packing consumer products; the automatic machine (1) comprises:
a plurality of movable operating members, each capable of assuming a plurality of different positions; and
a control unit (4), which is designed to control the movable operating members;
the automatic machine (1) is **characterized in that** it comprises a real time recording system (5), which is configured to record a trace (6) of at least part of the operating variables (7) characterizing the operation of the automatic machine (1); the automatic machine (1) being designed to at least partially perform the procedure according to one of the claims from 1 to 12.
